# EUROPEAN PATENT SPECIFICATION

(11) **EP 1 958 555 B1**
(45) Date of publication and mention of the grant of the patent: **03.11.2010**
(21) Application number: 07250643.9
(22) Date of filing: 15.02.2007
(51) Int. Cl.: A47J 43/24

(54) **Bowl and basket assembly**
Schüssel- und Korbanordnung
Ensemble de cuve et panier

(43) Date of publication of application: 20.08.2008
(73) Proprietor: So, Kwok Kuen, Kowloon, Hong Kong (CN)
(72) Inventor: So, Kwak Kuen; Chuan Yuan Factory Building, Kwun Tong, Kowloon, (HK); Wan, Yiu Chung Abel Room 9, 16/F, Block B, Tsuen Wan, New Territories (HK)
(74) Representative: Hall, Graeme Keith

(56) References cited:
- EP-A- 1 348 369
- FR-A- 829 700
- US-A- 5 064 535
- US-B1- 7 080 463

## Description

This invention relates to a bowl and basket assembly, such as a salad bowl and basket assembly.

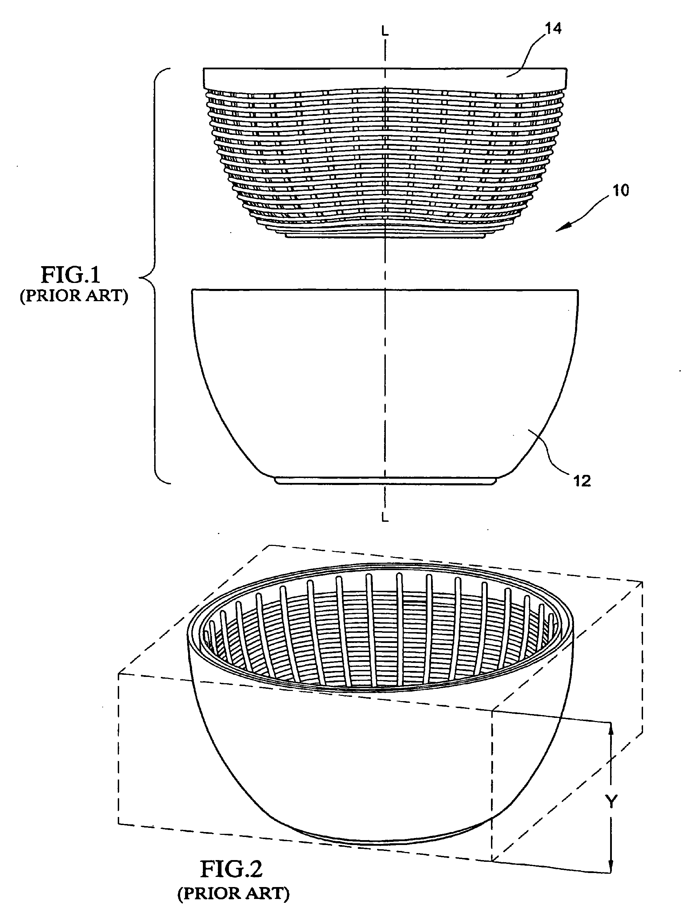

As shown in Fig. 1, a conventional salad bowl and basket assembly, generally designated as 10, includes at an outer bowl 12 and an inner perforated basket 14 for holding foodstuffs, e.g. vegetables. The basket 14 is receivable within the outer bowl 12, for draining purpose. This assembly may also form part of a salad spinner in which the basket 14 is rotatable relative to the outer bowl 12 about a common longitudinal axis L-L. During the rotational movement, the foodstuffs held by the basket 14 is dried as water attached to it is spun off and collected by the outer bowl 12. A cover may be provided for covering the bowl 12 and the basket 14. In some other conventional salad spinners, mechanisms are provided for driving the basket to rotate relative to the bowl to dry the foodstuffs held by the basket.

As can be seen in Fig. 2, when the salad bowl and basket assembly 10 is packaged, for example, for transport, it occupies a space with a height Y which is no less than the height of the outer bowl 12. However, the assembly 10 so packaged has an empty space 16 which is not utilized.

US Patent No. 7,080,463 discloses a salad spinner and mixer made from two substantially identical transparent bowls that can be joined together at their rims to define a chamber; two substantially identical colanders that can be joined together at their rims and received within the chamber; and a bifurcated base that has a spindle on each of two parallel upstanding portions. When the spindles are received within dimples on the bottoms of the bowls, the bowl and colander assembly can be spun about an axis defined by the spindles to remove water from the salad ingredients. The bowl assembly, used without the colanders, can also be use to mix salad dressing with salad ingredients. The resultant salad can be served in one of the bowls. Moreover, the bifurcated base can serve as a napkin holder.

EP 1348 369 A1 discloses a colander with reduced dimensions comprising a casing in the form of a spherical bowl, the lower part of which is provided with a series of small through holes designed for drainage. The colander includes a first casing in the form of a spherical bowl and a second casing in the form of a spherical segment with two bases, an upper circular rim of the spherical bowl of said first casing being connected in correspondence with a lower base of the spherical segment with two bases of the second casing by removable fixing means between the first and second casings.

It is thus an object of the present invention to provide a bowl and basket assembly and a bowl and basket assembly kit in which the aforesaid shortcoming is mitigated, or at least to provide a useful alternative to the public.

According to a first aspect of the present invention, there is provided a bowl and basket assembly kit for holding foodstuffs including at least two body members which are engageable with each other to form a perforated basket; and at least two body members which are engageable with each other to form a bowl for supporting said basket, **characterized in that** said at least two body members of said basket include at least an annular wall member and a bottom member, and said at least two body members of said bowl include at least an annular wall member and a bottom member.

According to a second aspect of the present invention, there is provided a bowl and basket assembly for holding foodstuffs including at least two body members which are engaged with each other to form a perforated basket; and at least two body members which are engaged with each other to form a bowl for supporting said basket, **characterized in that** said at least two body members of said basket include at least an annular wall member and a bottom member, and said at least two body members of said bowl include at least an annular wall member and a bottom member.

An embodiment of the present invention will now be described, by way of example only, with reference to the accompanying drawings, in which:
Fig. 1 is an exploded view of a conventional salad bowl and basket assembly;
Fig. 2 shows the way in which the conventional salad bowl and basket assembly of Fig. 1 is packaged;
Fig. 3 is a schematic diagram showing the basic idea of the present invention as applied to an outer bowl of a bowl and basket assembly;
Fig. 4 is an exploded view of an outer bowl of a bowl and basket assembly according to the present invention;
Fig. 5 is a schematic diagram showing the basic idea of the present invention as applied to an inner basket of a bowl and basket assembly;
Fig. 6 is an exploded view of an inner basket of a bowl and basket assembly according to the present invention;
Fig. 7 is an exploded view of the parts forming a bowl and basket assembly according to the present invention;
Fig. 8 is a sectional view showing the manner in which the parts forming the bowl and basket assembly according to the present invention are arranged when packaged;
Fig. 9 is a perspective view of the arrangement shown in Fig. 8;
Fig. 10 show sectional views of the packaging in Fig. 2 and Fig. 9 for comparison purpose;
Fig. 11 is a partial sectional perspective view of the basket shown in Fig. 6;
Fig. 12A is an enlarged view of the encircled part marked A in Fig. 11;
Fig. 12B is an enlarged view of the encircled part marked B in Fig. 11;
Fig. 12C is an enlarged view of the encircled part marked C in Fig. 11;
Fig. 12D is an enlarged view of the encircled part marked D in Fig. 11;
Fig. 13 is a partial sectional perspective view of the bowl shown in Fig. 4;
Fig. 14A is an enlarged view of the encircled part marked E in Fig. 13;
Fig. 14B is an enlarged view of the encircled part marked F in Fig. 13;
Fig. 14C is an enlarged view of the encircled part marked G in Fig. 13;
Fig. 14D is an enlarged view of the encircled part marked H in Fig. 13;
Fig. 15 is a side view of an assembled basket of the bowl and basket assembly according to the present invention;
Fig. 16 is a side view of an assembled bowl of the bowl and basket assembly according to the present invention; and
Fig. 17 is a perspective view showing the basket of Fig. 15 and the bowl of Fig. 16 assembled with each other.

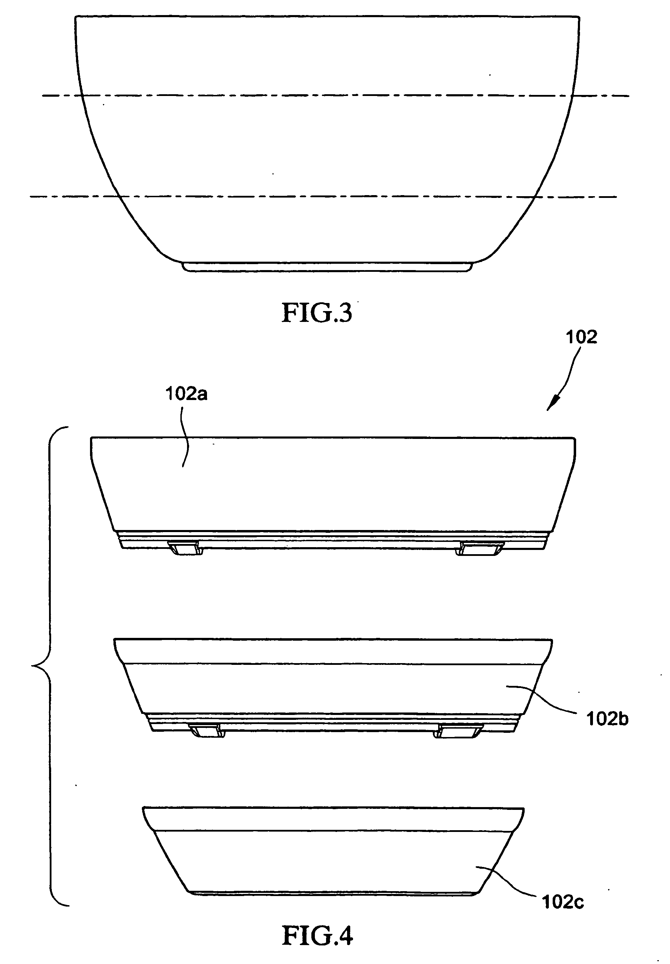

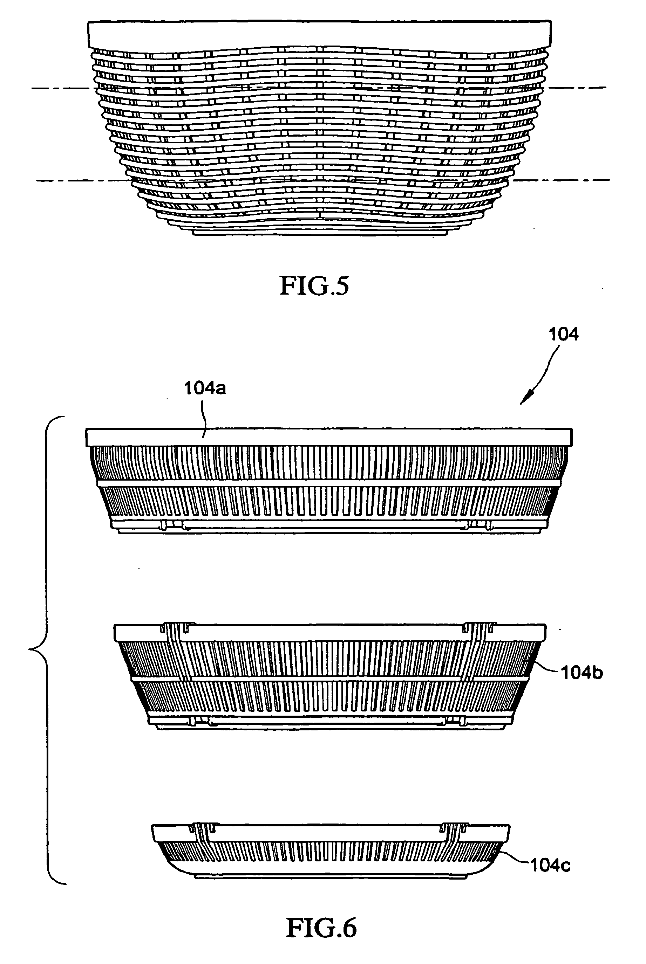

As can be seen in Figs. 3 to 6, the basic idea of the present invention is that, instead of integrally forming a basket and a bowl, each of the basket and the bowl is formed of a number of parts which are engageable with each other. As shown in Fig. 4, an open-top bowl 102 of a bowl and basket assembly of the present invention is formed of two annular wall parts 102a, 102b and a bottom part 102c. Similarly, as shown in Fig. 6, an open-top perforated basket 104 of a bowl and basket assembly of the present invention is formed of two annular perforated wall parts 104a, 104b and a perforated bottom part 104c.

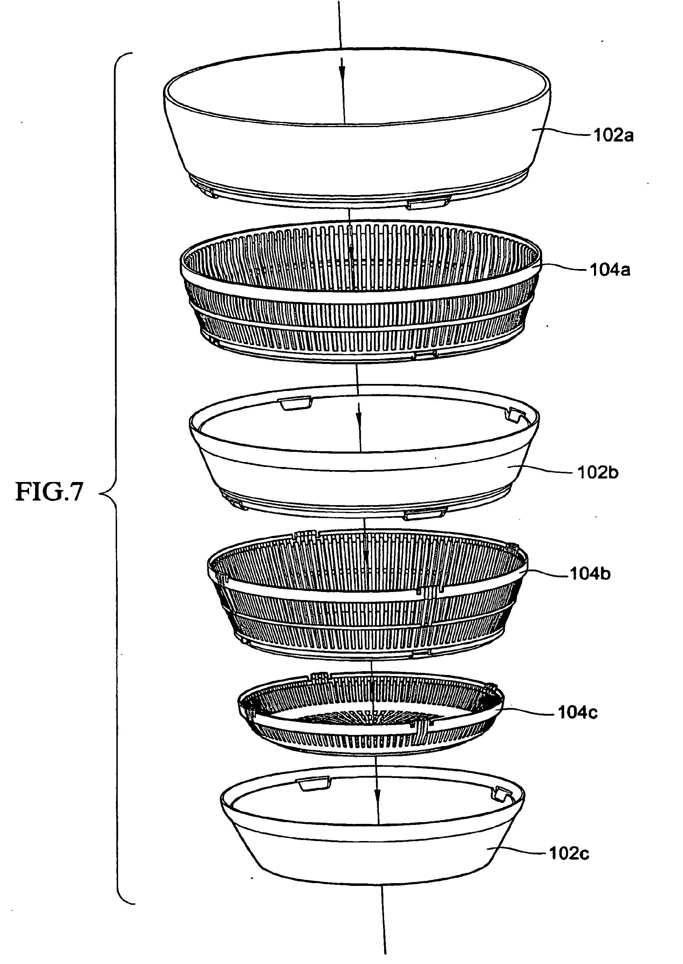

With such an arrangement, and as can be seen in Figs. 7 to 9, the annular wall parts 102a, 102b, bottom part 102c, annular perforated wall parts 104a, 104b and perforated bottom part 104c can be arranged concentrically in the following order (as counted from the outermost layer): the annular wall part 102a, the annular perforated wall part 104a, the annular wall part 102b, the annular perforated wall part 104b, the bottom part 102c, and the perforated bottom part 104c. An upwardly extending protrusion 106 of the bottom part 102c is received within a recess 108 of a lower surface of the perforated bottom part 104c for supporting the perforated bottom part 104c.

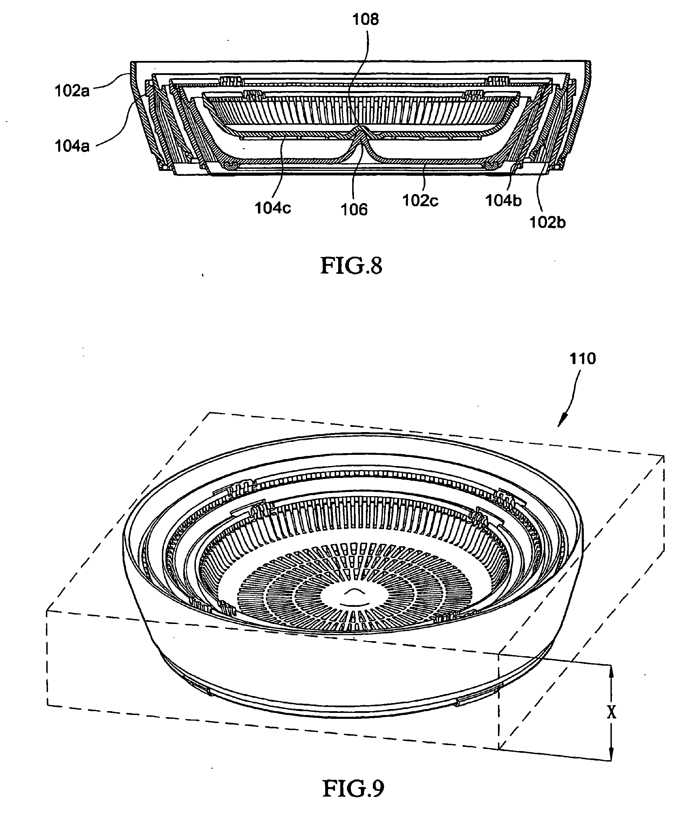

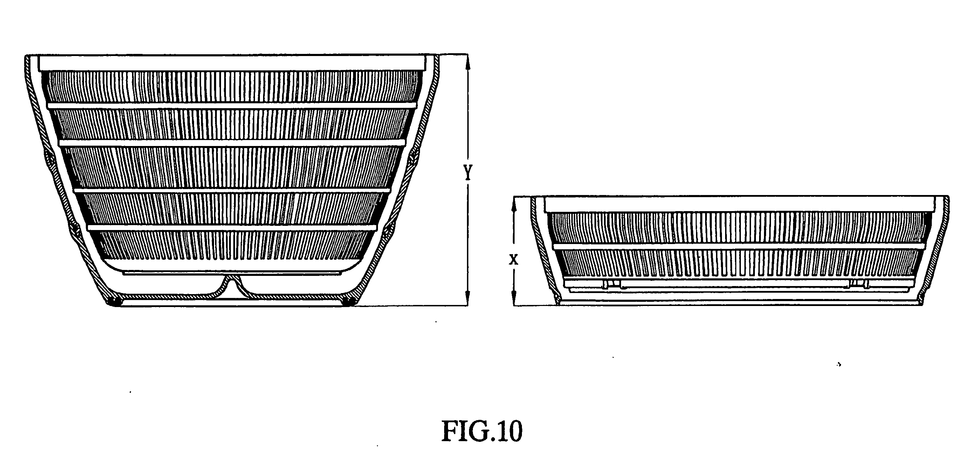

It can be seen that the height X occupied by the packaged bowl and basket assembly kit 110 shown in Fig. 9 is only slightly larger than the height of the annular wall part 102a. As can be seen more clearly in Fig. 10, the height Y (see Fig. 2 above) is significantly larger than the height X. It is found in practice that the volume occupied by the packaged bowl and basket assembly kit 110 according to the present invention is at least 40% less than that occupied by the conventional package as shown in Fig. 2. This will also mean that more bowl and basket assembly may be transported in the same containers, thus reducing the transportation cost.

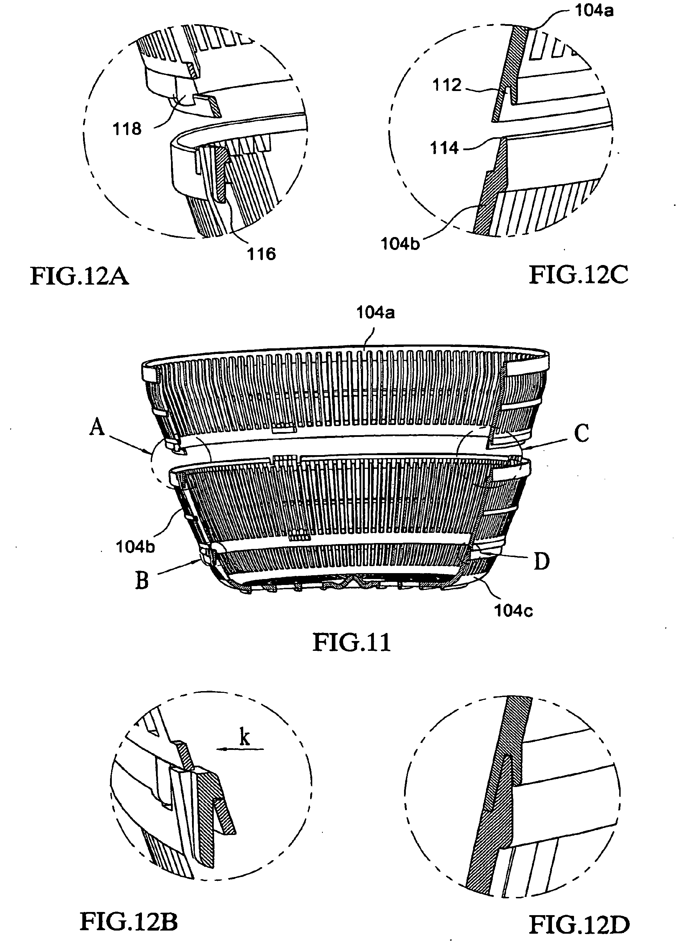

Figs. 11 to 12D show the structure of the annular perforated wall parts 104a, 104b and perforated bottom part 104c which allow these parts to be releasably engaged with each other. In Fig. 11, the annular perforated wall parts 104a, 104b are shown as being detached from each other, and the annular perforated wall part 104b and the perforated bottom part 104c are shown as being engaged with each other.

As shown in Figs. 12A and 12C, a lower rim of the wall part 104a is provided with a recess 112 around the outer surface of the wall part 104a for receiving a complementarily shaped and sized male portion 114 along an upper rim of the wall part 104b. Along the upper rim of the wall part 104b are provided four resilient hooks 116 which are integrally formed with the wall part 104b. Along the lower rim of the wall part 104a are provided four shaped recesses 118 each for engagement with one of the hooks 116.

When the wall part 104b is moved upwardly relatively to the wall part 104a, the hooks 116 are snap fitted with the respective recess 118, in the manner as shown in Fig. 12B, to fixedly engage the wall parts 104a, 104b with each other. When the wall parts 104a, 104b are so engaged, the recess 112 and the male portion 114 are engaged with each other in the manner as shown in Figs. 12D. The wall part 104b and the bottom part 104c are releasably engageable with each other in the same manner.

If necessary, the hook 116 may be acted on by a force in the direction indicated by the arrow K in Fig. 12B to pivot outwardly so as to disengage the hook 116 from the respective recess 118. When all the hooks 116 are thus disengaged from the recesses 118, the wall parts 104a, 104b may be disengaged from each other, or the wall part 104b and the bottom part 104c may be disengaged from each other.

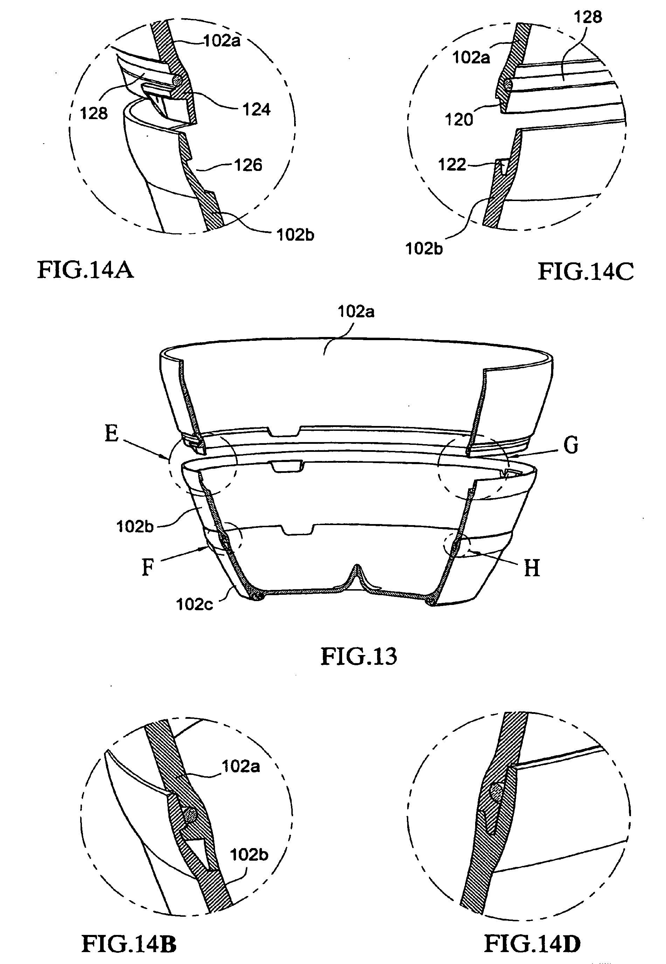

Figs. 13 to 14D show the structure of the annular wall parts 102a, 102b and the bottom part 102c which allow these parts to be engaged with each other. In Fig. 13, the annular wall parts 102a, 102b are shown as being detached from each other, and the annular wall part 102b and the bottom part 102c are shown as being engaged with each other.

As shown in Figs. 14A and 14C, a lower rim of the wall part 102a is provided with a male portion 120 around the outer surface of the wall part 102a, to be received within a complementarily shaped and sized recess 122 along an upper rim of the wall part 102b. Along the lower rim of the wall part 102a are provided four resilient extensions 124 which are integrally formed with the wall part 102a. Along the upper rim of the wall part 102b are provided four shaped recesses 126 each for engagement with one of the extensions 124.

When the wall part 102b is moved upwardly relatively to the wall part 102a, the extensions 124 are snap fitted with the respective recess 126, in the manner as shown in Fig. 14B, to fixedly engage the wall parts 102a, 102b with each other. When the wall parts 102a, 102b are so engaged with each other, the recess 122 and the male portion 120 are engaged with each other in the manner as shown in Figs. 14D. The wall part 102b and the bottom part 102c are engageable with each other in the same manner.

It can also be seen that along the outer surface of the wall part 102a and adjacent its lower rim is a resilient O-ring 128, which may be made of silicon rubber, to ensure that the engagement between the wall part 102a and the wall part 102b is sealed. Similarly, an O-ring is also carried by the wall part 102b for achieving sealed engagement with the bottom part 102c.

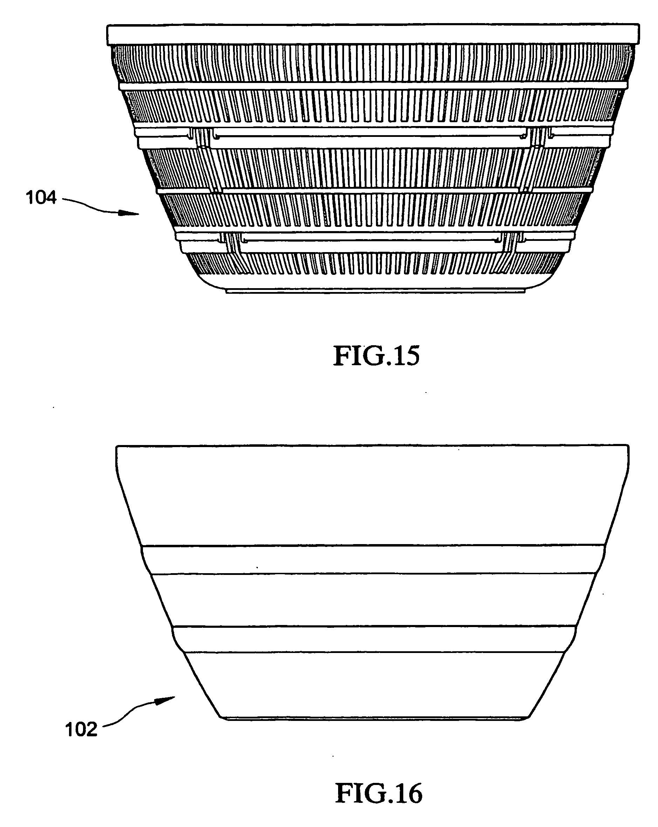

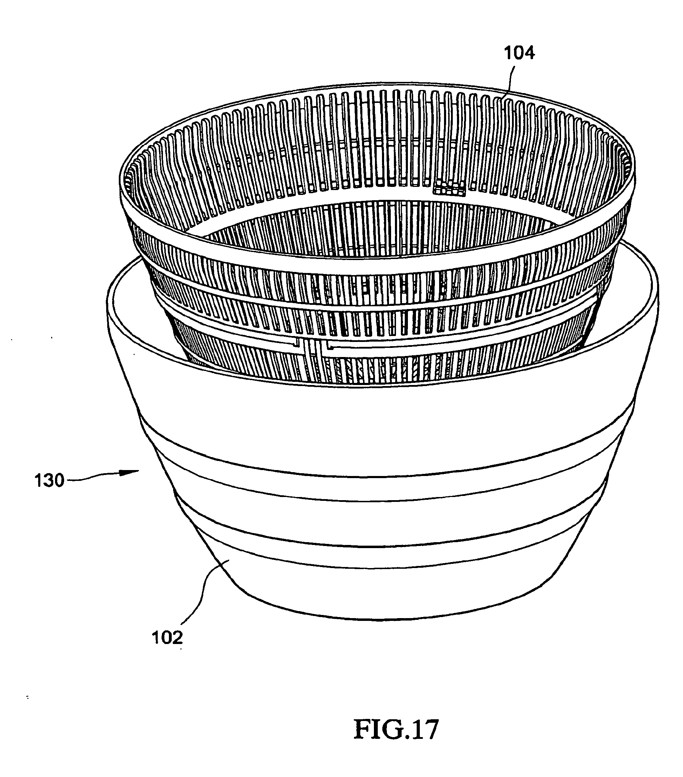

Fig. 15 shows the inner basket 104 as assembled, and Fig. 16 shows the outer bowl 102 as assembled. The basket 104 and the bowl 102 may be assembled with each other to form a bowl and basket assembly according to the present invention, and generally designated as 130 in Fig. 17. The basket 104 may be supported by the bowl 102 for draining, and for relative rotational movement about a common longitudinal axis if the bowl and basket assembly 130 is employed in a salad spinner.

## Claims

1. A bowl and basket assembly kit (110) for holding foodstuffs including:
at least two body members (104a, 104b, 104c) which are engageable with each other to form a perforated basket (104); and
at least two body members (102a, 102b, 102c) which are engageable with each other to form a bowl (102) for supporting said basket (104),
**characterized in that** said at least two body members of said basket include at least an annular wall member (104a, 104b) and a bottom member (104c), and
said at least two body members of said bowl include at least an annular wall member (102a, 102b) and a bottom member (102c).

2. A bowl and basket assembly kit according to Claim 1 further **characterized in that** said body members of said basket are snappingly engageable with each other.

3. A bowl and basket assembly kit according to Claim 1 or 2 further **characterized in that** said body members of said bowl are snappingly engageable with each other.

4. A bowl and basket assembly kit according to any of the preceding claims further **characterized in that** one of said body members of said basket includes at least one resilient hook member snappingly engageable with a recess portion of the other of said body members of said basket.

5. A bowl and basket assembly kit according to any of the preceding claims further **characterized in that** one of said body members of said bowl includes at least one protrusion engageable with a recess portion of the other of said body members of said bowl.

6. A bowl and basket assembly kit according to any of the preceding claims further **characterized in that** said body members of said bowl are sealingly engageable with each other.

7. A bowl and basket assembly kit according to Claim 6 further **characterized in that** at least one of said body members of said bowl carries a sealing ring.

8. A bowl and basket assembly for holding foodstuffs including
at least two body members (104a, 104b, 104c) which are engaged with each other to form a perforated basket (104); and
at least two body members (102a, 102b, 102c) which are engaged with each other to form a bowl (102) for supporting said basket (104),
**characterized in that** said at least two body members of said basket include at least an annular wall member (104a, 104b) and a bottom member (104c), and
said at least two body members of said bowl include at least an annular wall member (102a, 102b) and a bottom member (102c).

9. A bowl and basket assembly according to Claim 8 further **characterized in that** said body members of said basket are snappingly engaged with each other.

10. A bowl and basket assembly according to Claim 8 or 9 further **characterized in that** said body members of said bowl are snappingly engaged with each other.

11. A bowl and basket assembly according to Claim 8, 9 or 10 further **characterized in that** one of said body members of said basket includes at least one resilient hook member snappingly engaged with a recess portion of the other of said body members of said basket.

12. A bowl and basket assembly according to any of one Claims 8 to 11 further **characterized in that** one of said body members of said bowl includes at least one protrusion engaged with a recess portion of the other of said body members of said bowl.

13. A bowl and basket assembly according to any one of Claims 8 to 12 further **characterized in that** said body members of said bowl are sealingly engaged with each other.

14. A bowl and basket assembly according to Claim 13 further **characterized in that** at least one sealing ring between said body members of said bowl.

## Patentansprüche

1. Schüssel-und Korb-Bausatz (110) zum Aufnehmen von Nahrungsmitteln, der Folgendes einschließt:
wenigstens zwei Korpuselemente (104a, 104b, 104c), die miteinander in Eingriff gebracht werden können, um einen perforierten Korb (104) zu bilden, und
wenigstens zwei Korpuselemente (102a, 102b, 102c), die miteinander in Eingriff gebracht werden können, um eine Schüssel (102) zu bilden, um den Korb (104) zu tragen,
**dadurch gekennzeichnet, dass** die wenigstens zwei Korpuselemente des Korbes wenigstens ein ringförmiges Wandelement (104a, 104b) und ein Bodenelement (104c) einschließen und
die wenigstens zwei Korpuselemente der Schüssel wenigstens ein ringförmiges Wandelement (102a, 102b) und ein Bodenelement (102c) einschließen.

2. Schüssel-und Korb-Bausatz nach Anspruch 1, ferner **dadurch gekennzeichnet, dass** die Korpuselemente des Korbes einrastend miteinander in Eingriff gebracht werden können.

3. Schüssel-und Korb-Bausatz nach Anspruch 1 oder 2, ferner **dadurch gekennzeichnet, dass** die Korpuselemente der Schüssel einrastend miteinander in Eingriff gebracht werden können.

4. Schüssel-und Korb-Bausatz nach einem der vorhergehenden Ansprüche, der ferner **dadurch gekennzeichnet ist, dass** das eine der Korpuselemente des Korbes wenigstens ein elastisches Hakenelement einschließt, das einrastend mit einem Aussparungsabschnitt des anderen der Korpuselemente des Korbes in Eingriff gebracht werden kann.

5. Schüssel-und Korb-Bausatz nach einem der vorhergehenden Ansprüche, ferner **dadurch gekennzeichnet, dass** das eine der Korpuselemente der Schüssel wenigstens einen Vorsprung einschließt, der mit einem Aussparungsabschnitt des anderen der Korpuselemente der Schüssel in Eingriff gebracht werden kann.

6. Schüssel-und Korb-Bausatz nach einem der vorhergehenden Ansprüche, ferner **dadurch gekennzeichnet, dass** die Korpuselemente der Schüssel abdichtend miteinander in Eingriff gebracht werden können.

7. Schüssel-und Korb-Bausatz nach Anspruch 6, ferner **dadurch gekennzeichnet, dass** wenigstens eines der Korpuselemente der Schüssel einen Dichtungsring trägt.

8. Schüssel-und Korb-Bausatz zum Aufnehmen von Nahrungsmitteln, der Folgendes einschließt:
wenigstens zwei Korpuselemente (104a, 104b, 104c), die miteinander in Eingriff gebracht sind, um einen perforierten Korb (104) zu bilden, und
wenigstens zwei Korpuselemente (102a, 102b, 102c), die miteinander in Eingriff gebracht sind, um eine Schüssel (102) zu bilden, um den Korb (104) zu tragen,
**dadurch gekennzeichnet, dass** die wenigstens zwei Korpuselemente des Korbes wenigstens ein ringförmiges Wandelement (104a, 104b) und ein Bodenelement (104c) einschließen und
die wenigstens zwei Korpuselemente der Schüssel wenigstens ein ringförmiges Wandelement (102a, 102b) und ein Bodenelement (102c) einschließen.

9. Schüssel-und Korb-Bausatz nach Anspruch 8, ferner **dadurch gekennzeichnet, dass** die Korpuselemente des Korbes einrastend miteinander in Eingriff gebracht sind.

10. Schüssel-und Korb-Bausatz nach Anspruch 8 oder 9, ferner **dadurch gekennzeichnet, dass** die Korpuselemente der Schüssel einrastend miteinander in Eingriff gebracht sind.

11. Schüssel-und Korb-Bausatz nach Anspruch 8, 9 oder 10, ferner **dadurch gekennzeichnet, dass** das eine der Korpuselemente des Korbes wenigstens ein elastisches Hakenelement einschließt, das einrastend mit einem Aussparungsabschnitt des anderen der Korpuselemente des Korbes in Eingriff gebracht ist.

12. Schüssel-und Korb-Bausatz nach einem der Ansprüche 8 bis 11, ferner **dadurch gekennzeichnet, dass** das eine der Korpuselemente der Schüssel wenigstens einen Vorsprung einschließt, der mit einem Aussparungsabschnitt des anderen der Korpuselemente der Schüssel in Eingriff gebracht ist.

13. Schüssel-und Korb-Bausatz nach einem der Ansprüche 8 bis 12, ferner **dadurch gekennzeichnet, dass** die Korpuselemente der Schüssel abdichtend miteinander in Eingriff gebracht sind.

14. Schüssel-und Korb-Bausatz nach Anspruch 13, ferner **dadurch gekennzeichnet, dass** es wenigstens einen Dichtungsring zwischen den Korpuselementen der Schüssel gibt.

## Revendications

1. Kit d'assemblage à bol et panier (110) pour contenir des denrées alimentaires, englobant:
au moins deux éléments de corps (104a, 104b, 104c), pouvant s'engager l'un dans l'autre pour former un panier perforé (104) ; et
au moins deux éléments de corps (102a, 102b, 102c), pouvant s'engager l'un dans l'autre pour former un bol (102) pour supporter ledit panier (104) ;
**caractérisé en ce que** lesdits au moins deux éléments de corps dudit panier englobent au moins un élément de paroi annulaire (104a, 104b) et un élément de fond (104c) ; et
lesdits au moins deux éléments de corps dudit bol englobent au moins un élément de paroi annulaire (102a, 102b) et un élément de fond (102c).

2. Kit d'assemblage à bol et panier selon la revendication 1, **caractérisé en outre en ce que** lesdits éléments de corps dudit panier peuvent s'engager par encliquetage l'un dans l'autre.

3. Kit d'assemblage à bol et panier selon la revendication les revendications 1 ou 2, **caractérisé en outre en ce que** lesdits éléments de corps dudit bol peuvent s'engager par encliquetage l'un dans l'autre.

4. Kit d'assemblage à bol et panier selon l'une quelconque des revendications précédentes, **caractérisé en** outre en ce l'un desdits éléments de corps dudit panier englobe au moins un élément de crochet élastique pouvant s'engager par encliquetage dans une partie évidée de l'autre desdits éléments de corps dudit panier.

5. Kit d'assemblage à bol et panier selon l'une quelconque des revendications précédentes, **caractérisé en** outre en ce l'un desdits éléments de corps dudit bol englobe au moins une saillie pouvant s'engager dans une partie évidée de l'autre desdits éléments de corps dudit bol.

6. Kit d'assemblage à bol et panier selon l'une quelconque des revendications précédentes, **caractérisé en outre en ce que** lesdits éléments de corps dudit bol peuvent s'engager de manière étanche l'un dans l'autre.

7. Kit d'assemblage à bol et panier selon la revendication 6, **caractérisé en outre en ce que** au moins un desdits éléments de corps dudit bol supporte une bague d'étanchéité.

8. Assemblage à bol et panier pour contenir des denrées alimentaires, englobant
au moins deux éléments de corps (104a, 104b, 104c), engagés l'un dans l'autre pour former un panier perforé (104) ; et
au moins deux éléments de corps (102a, 102b, 102c), engagés l'un dans l'autre pour former un bol (102) pour supporter ledit panier (104) ;
**caractérisé en ce que** lesdits au moins deux éléments de corps dudit panier englobent au moins un élément de paroi annulaire (104a, 104b) et un élément de fond (104c) ; et
lesdits au moins deux éléments de corps dudit bol englobent au moins un élément de paroi annulaire (102a, 102b) et un élément de fond (102c).

9. Assemblage à bol et panier selon la revendication 8, **caractérisé en outre en ce que** lesdits éléments de corps dudit panier sont engagés par encliquetage l'un dans l'autre.

10. Assemblage à bol et panier selon les revendications 8 ou 9, **caractérisé en** outre lesdits éléments de corps dudit bol sont engagés par encliquetage l'un dans l'autre.

11. Assemblage à bol et panier selon les revendications 8, 9 ou 10, **caractérisé en outre en ce que** l'un desdits éléments de corps dudit panier englobe au moins un élément de crochet élastique engagé par encliquetage dans une partie évidée de l'autre desdits éléments de corps dudit panier.

12. Assemblage à bol et panier selon l'une quelconque des revendications 8 à 11, **caractérisé en** outre en ce l'un desdits éléments de corps dudit bol englobe au moins une saillie engagée dans une partie évidée de l'autre desdits éléments de corps dudit bol.

13. Assemblage à bol et panier selon l'une quelconque des revendications 8 à 12, **caractérisé en outre en ce que** lesdits éléments de corps dudit bol sont engagés de manière étanche l'un dans l'autre.

14. Assemblage à bol et panier selon la revendication 13, **caractérisé en outre en ce qu'**au moins une bague d'étanchéité est agencée entre lesdits éléments de corps dudit bol.
